# EUROPEAN PATENT SPECIFICATION

(11) **EP 0 795 860 B1**
(45) Date of publication and mention of the grant of the patent: **04.06.2003**
(21) Application number: 97103777.5
(22) Date of filing: 06.03.1997
(51) Int. Cl.: G11B 20/10

(54) **Apparatus for reproducing audio signals**
Gerät zur Wiedergabe von Audiosignalen
Appareil de reproduction de signaux audio

(30) Priority: 13.03.1996 JP 8484596; 03.06.1996 JP 16383196
(43) Date of publication of application: 17.09.1997
(73) Proprietor: FIDELIX Y.K., Kiyose-shi, Tokyo 204 (JP)
(72) Inventor: Nakagawa, Shin, Kiyose-shi, Tokyo 204 (JP)
(74) Representative: Fleuchaus, Leo, Dipl.-Ing.

(56) References cited:
- EP-A- 0 497 050
- EP-A- 0 568 846
- EP-A- 0 706 299
- WO-A-95/34964
- US-A- 4 752 956
- US-A- 5 054 075
- US-A- 5 388 159
- PATENT ABSTRACTS OF JAPAN vol. 014, no. 258 (P-1055), 4 June 1990 & JP 02 068773 A (SONY CORP), 8 March 1990
- PATENT ABSTRACTS OF JAPAN vol. 095, no. 005, 30 June 1995 & JP 07 036490 A (CLARION CO LTD), 7 February 1995
- PATENT ABSTRACTS OF JAPAN vol. 096, no. 001, 31 January 1996 & JP 07 236193 A (SONY CORP), 5 September 1995

## Description

### Background of the Invention

### 1) Field of the Invention

The present invention relates to an apparatus for reproducing audio signals, suitably used in all forms of audio signal reproducing systems. The invention particularly relates to an apparatus for reproducing audio signals by which the quality of sound reproduced in the audio signal reproducing system is favourably improved to become natural in a higher compass range of the sound.

### 2) Related Art

In digital audio equipment, such as a CD (compact disc) player, there is still dissatisfaction left in the sound in view of a point in reproducing natural audio signals, because the frequency characteristic in a higher compass range of the reproduced sound is limited by a sampling frequency, etc. That is to say, the sampling frequency of a CD player is generally 44.1kHz, and the upper limit of the sound reproduced in a CD player where the a sampling frequency of 44.1kHz is used is about a half thereof, i.e. 20kHz. Therefore, the spectrum of the reproduced sound shows a shape where the frequency range exceeding over 20kHz is cut off. The standard of the sampling frequency 44.1kHz is decided on the basis of thinking that people can not hear a sound in a high frequency compass range exceeding over 20kHz with their ears. However, according to a recent study, it has been proved that people can sense a sound in the high frequency compass range exceeding over 20kHz; therefore when the sound, in which the high frequency component of the frequency compass range is lacking, is reproduced in conventional digital type audio equipment, it is impossible to reproduce sound favourably and naturally to satisfy the auditory sense of the listeners.

There are some suggestions to improve the quality of sound reproduced by the digital type audio equipment, one of which is to add a noise so-called "dither" to the original audio signal, and another one is to add harmonics to the original audio signal. The present inventor suggests a method and apparatus for reproducing audio signals in the Japanese Patent Preliminarily Publication No. 1997-36685, where the audio signal component in the high frequency range, which is lacking from the original audio signal to be reproduced in the digital audio equipment, is compensated for by adding a noise component in a high frequency compass range to the original audio signals . In this publication, there are also suggested that not only the noise component but also harmonics are added to the original audio signal with some time delay in order to improve the quality of sound to be reproduced in the digital type audio equipment.

According to a prior suggestion of the applicant in EP-A-0706299 a desirable sound in people's audia sense can be reproduced by adding a random noise component and/or a higher harmonics component to the original audio signal. These components exceed the upper limit of the reproducible frequency range or the upper limit of the audible frequency range.

However, according to the inventor's study thereafter, the auditory sense or taste for sound is different in every listener, and the condition for hearing sound, i.e. the room acoustic condition, is slightly different in a complex manner and has many variations. In order to comply with such various needs of the listeners, it is necessary to adjust the ratio of the amount of the noise component and the harmonics to be added to the original audio signal or an amount of the time delay which is given to the noise component and/or the harmonics.

The present invention has its purpose to provide an apparatus for reproducing audio signals where the signal, to be added to the original audio signals, i.e. the noise component and/or the harmonics, can be suitably adjusted, and thus the quality of the sound reproduced in the audio equipment is improved so as to comply with the various audible senses or preferences of listeners and to comply with the various used and conditions of the audio equipment.

In order to make the size of the apparatus compact, reduce consumption of electric power, and to make the cost of manufacturing the apparatus low, it is necessary to make the construction of the apparatus simpler. Further, in case that the listener's demand in sound quality is not so high, it is necessary to reduce the price of the apparatus by omitting complex electric circuits.

In reply to these requirements, the present invention has its purpose to provide an apparatus for reproducing audio signals where only a simple circuit construction is provided but the quality of sound can be improved to almost the same level as the apparatus according to the inventor's previous invention.

### Summary of the Invention

In order to carry out the above-mentioned purpose, the invention provides an apparatus for reproducing audio signals according to claim 1. Further developments of the invention are subject of dependent claims.

For utilisation of the invention a high frequency compass range of an audio signal is compensated for by adding a noise component, harmonics or both a noise component and harmonics, having a spectrum in a frequency range exceeding over an upper limit of a reproducible frequency range or exceeding over an upper limit of an audible frequency range. The apparatus is constructed such that the noise component, the harmonics, the noise component having a time delay, and harmonics having a time delay are all suitably combined to each other and then added to the original audio signal, so that an improved sound can be obtained which complies with the audible sense or taste of listeners.

As stated in the specification of the Japanese Patent Publication No.1997-36685, it is possible to compensate for a signal in a high frequency compass range, which is cut off in the conventional digital audio equipment when the audio signal is reproduced there, by adding a noise component to an original audio signal under a certain condition. Further, by adding harmonics to the original audio signal, a leading edge of a sound of a piano or percussion instruments can be reproduced in much more real manner; and if both the noise component and the harmonics are added to the original audio signal, a more naturally reproduced sound can be obtained. Furthermore, if a noise component and/or harmonics with some time delay is/are added, a rich reverberation can be reproduced and then each phrase of the music becomes smooth, so that more natural sound can be reproduced. The present inventor has recognized in his experiments that the balance of the amounts of noise component and harmonics to be added to the original audio signal should be decided depending on the type of music instruments which are used to play the music, however, generally, if more noise component is added than harmonics, the sound becomes better.

As stated above, there are suggested here to give a time delay element to the signal to be added to the original audio signal, i.e. only to a noise component, only to harmonics, or both to noise component and harmonics, etc. Further, it is possible to vary the envelope of the signal to be added to the original audio signal by arranging a differentiating element(s) in the time delay element generating means. According to the present invention, it is possible to adjust the ratio of the amounts of noise component and harmonics to be added to the original audio signal or the amount of the time delay to be given to the noise component and/or harmonics so as to comply to the demand of the listener, such as the taste in sound or a decrease in the manufacturing cost of the apparatus, etc. In any case, such an effect can be obtained that the sound reproduced in the audio equipment becomes near the natural sound.

Furthermore, according to the present invention, the apparatus is constructed such that a plurality of time delay types, such as a short time delay, by which a leading edge of the sound signal is especially compensated, a long time delay, by which a reverberation part of the sound is compensated, or the combination thereof is given to the noise component and/or harmonics. Therefore, by arranging a combination of the types of time delay, it becomes possible to obtain a reproduced sound, which widely covers the audible sense range of the listener.

Moreover, according to the present invention, in order to make construction of the apparatus simple, the apparatus is constructed such that noise which is naturally generated in electric circuits provided in the apparatus, is used to be added to the original audio signal without the need of having a noise generator. That is to say, the noise component to be added to the original audio signal is directly taken out from the original audio signal, or taken out from an output of a harmonics component generating means, where the harmonics are obtained from the original audio signal. Such a construction is especially effective in an apparatus for reproducing audio signals using a one bit type D/A converter, because in such an apparatus using a one bit type D/A converter some noise components are contained in the original audio signal per se in its high frequency range. In this case, a part of the original audio signal is taken out; a noise component having a high frequency spectrum in a range exceeding over an upper limit of a reproducible frequency range or exceeding over an upper limit of the audible frequency range is selected from the original audio signal; and the high frequency noise component taken out from the original audio signal is amplified and then added to the original audio signal. Furthermore, it is also possible to have a construction such that once the level of the signal taken from the original audio signal is attenuated by means of a signal attenuator, then amplified; and a noise, which is generated during when the attenuated signal is amplified, is added to the original audio signal. In either case, any noise generator is unnecessary, so that the size of the apparatus can be made compact, additionally the manufacturing cost therefore can be reduced.

It should be noted that it is preferred to adjust the amount of the noise component and/or harmonics to be added to the original reproducing audio signal in accordance with a level control signal which is taken from an original audio signal.

### Brief Explanation of the Drawings

Fig. 1 is a block diagram showing an audio signal reproducing apparatus according to the first embodiment of the present invention;
Fig. 2 is a block diagram depicting an audio signal reproducing apparatus according to the second embodiment of the present invention;
Fig. 3 is a block diagram illustrating an audio signal reproducing apparatus according to the third embodiment of the present invention;
Fig. 4 is a block diagram representing an audio signal reproducing apparatus according to the fourth embodiment of the present invention;
Fig. 5 is a block diagram showing an audio signal reproducing apparatus according to the fifth embodiment of the present invention;
Fig. 6 is a circuit diagram depicting a construction of a time constant circuit which is suitably applied to the audio signal reproducing apparatus according to the present invention;
Fig. 7 is a circuit diagram illustrating another construction of a time constant circuit which is suitably applied to the audio signal reproducing apparatus according to the present invention;
Figs. 8(a) to (f) are schematic views representing envelopes of the output signals of the time constant circuit applied to the audio signal reproducing apparatus according to the present invention;
Fig. 9 is a block diagram showing an audio signal reproducing apparatus according to the sixth embodiment of the present invention; and
Fig. 10 is a block diagram depicting an audio signal reproducing apparatus according to the seventh embodiment of the present invention.

### Detailed Explanation of the Preferred Embodiments

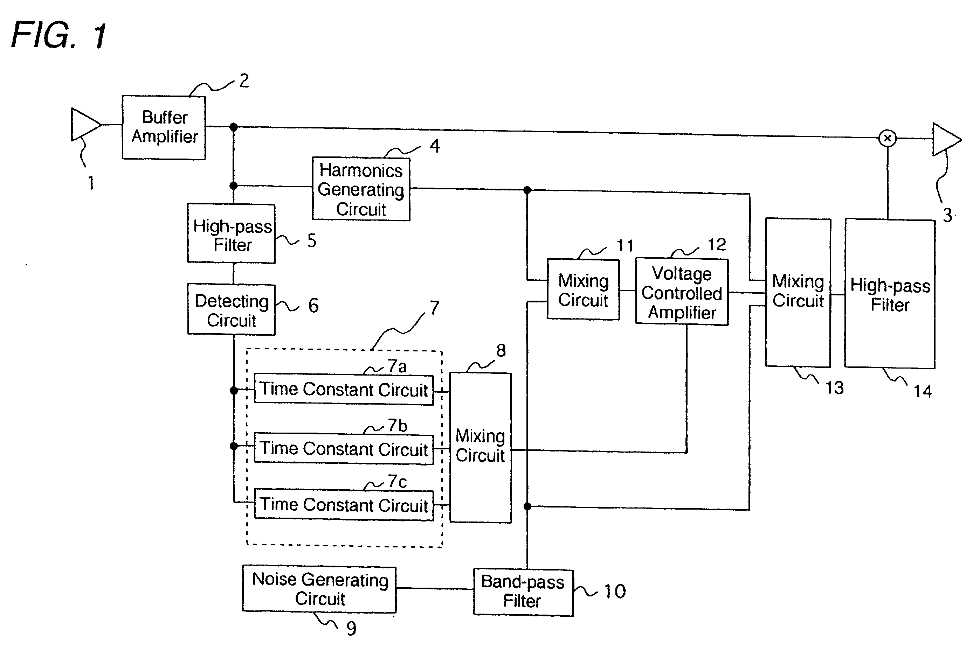

Fig. 1 is a block diagram showing a construction of the audio signal reproducing apparatus according to the first embodiment of the present invention. It should be noted that in the embodiments explained below the apparatus is applied to an output portion of an audio equipment after an original audio signal is converted from a digital signal to an analog signal.

An original audio signal is supplied from an input terminal 1 to a buffer amplifier 2 and then separated into two signal lines. One of the lines is directly connected to an output signal 3 and the other line to a harmonics generating circuit 4 and a high pass filter 5, respectively, so that the original audio signal supplied into the circuit 4 and the filter 5. By the high pass filter 5, only a signal component having a specific frequency band (here, a signal having a frequency of 6kHz or more) is allowed to pass through; the signal component is detected by a detector circuit 6; and then supplied into a time constant means 7. In the first embodiment, the time constant means 7 comprises first to third time constant circuits 7a, 7b, 7c; in the first time constant circuit 7a, a comparatively short time constant (0.2 to 2.2 mS) is generated; in the second time constant circuit 7b, a middle time constant (2.2mS±40) is given; and in the third time constant circuit 7c a comparatively long time constant (2.2 to 25mS) is produced. The outputs of these three time constant circuits 7a to 7c are mixed together in a first mixing circuit 8 in accordance to the preference of a listener; and then the mixed signal is supplied to a voltage controlled amplifier 12.

On the other hand, harmonics of the original audio signal are generated in the harmonics generating circuit 4. A part of the harmonics generated in the harmonics generating circuit 4 are supplied to a second mixing circuit 11; and the other part of the harmonics are directly supplied into a third mixing circuit 13, which is provided on a downstream side of the second mixing circuit 11. A noise generator 9 is provided to be separated from a signal source of the original audio signal. A noise generated in the noise generator 9 is supplied into a band pass filter 10, where a noise component having a suitable frequency range (here, 20 to 100kHz) is selected. A part of the thus selected noise component is directly supplied to the third mixing circuit 13 and the other part thereof is provided to the second mixing circuit 11 to be mixed with the part of the harmonics which is generated in the harmonics generating circuit 4. Concerning the ratio of the amount of the noise component and the harmonics to be mixed together in the second mixing circuit 11, it is generally preferred to add much more the noise component than the harmonics to the original audio signal. However, it is available to mix them in accordance to the preference of the listener.

The output of the second mixing circuit 11 is supplied to the voltage controlled amplifier 12 where a time delay is given to the output of the second mixing circuit 11 in accordance with the time constant provided in the signal supplied from the first mixing circuit 8; and then the signal is supplied into the third mixing circuit 13. Therefore, in the third mixing circuit 13, the harmonics generated in the harmonics generating circuit 4, the noise component generated in the noise generator 9 and the harmonics and the noise component both having a time delay are mixed together. An output of the third mixing circuit 13 is added to the original audio signal via a high pass filter 14, where a signal component having its frequency of 20kHz or less is cut off.

It should be noted that the output signal of the first mixing circuit 8 is used as a level control signal for controlling the amount of the signal component to be added to the original audio signal, so that a suitable amount of the signal component is added to the original audio signal in accordance with the signal level of the output signal of the circuit 8.

As stated above, in the first embodiment, the apparatus is constructed such that a noise component, harmonics, a noise component having a time delay, and harmonics having a time delay are added to the original audio signal, so that the sound reproduced from the output terminal 3 becomes suitable according to the preference of the listener by adjusting the amounts of the noise and harmonics to be added to the original audio signal and the degree of the time delay to be given to the noise component and the harmonics.

Some modifications of the first embodiment are suggested; one of which is arranged such that the output of the harmonics generating circuit 4 is supplied only to the second mixing circuit 11. In this case, a noise component having no time delay, a noise component having a time delay, and harmonics having a time delay are added to the original audio signal. Another modification is constructed such that the output of the noise generator 9 is supplied only to the second mixing circuit 11. In this case, harmonics having no time delay, a noise component having a time delay and harmonics having a time delay are added to the original audio signal. It is also possible to modify the first embodiment such that the outputs of the harmonics generating circuit 4 and the noise generating circuit 9 are supplied only to the second mixing circuit 11, so that only a noise component and harmonics both having a time delay are added to the original audio signal.

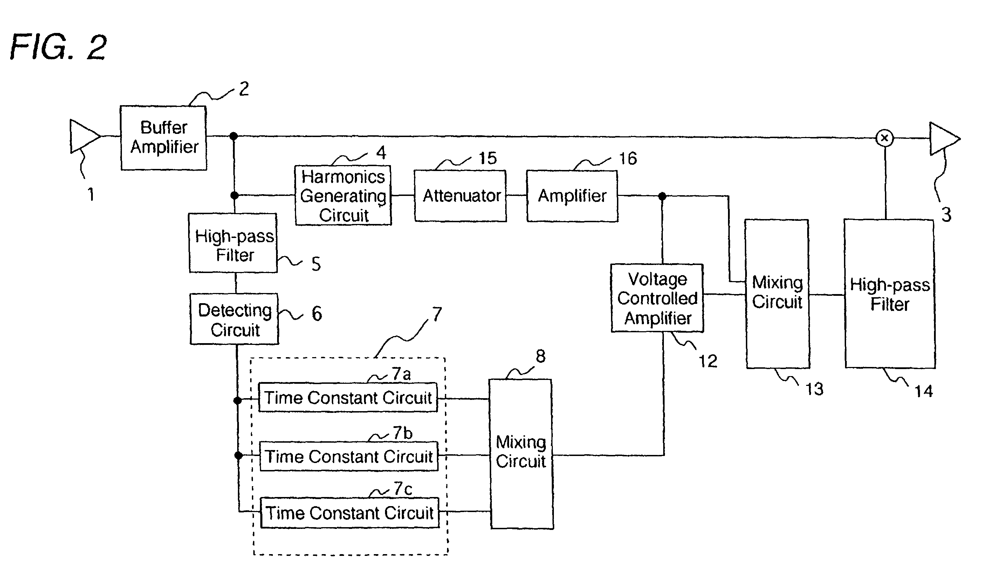

Fig. 2 is a block diagram depicting a construction of the apparatus for representing audio signals according to the second embodiment of the present invention. It should be noted that the same reference numbers as those in the first embodiment are used for the same elements in the second to fourth embodiments and the explanation therefore is omitted.

An input signal coming from an input terminal 1 is separated into two signal lines via a buffer amplifier 2 as well as the first embodiment; one of which is directly connected to an output terminal.3; the other one is supplied to a harmonics generating circuit 4 and a high pass filter 5, respectively. The signal supplied into the high pass filter 5 is further provided to a time constant circuit 7 via a detecting circuit 6 to give a time delay to the signal, as well as the first embodiment. The output of the time constant circuit 7 is then sent to a voltage controlled amplifier 12 via the first mixing circuit 8 as a level control signal to control the amount of the signal to be added to the original audio signal.

In the second embodiment, an attenuator 15 and an amplifier 16 are provided in the downstream side of the harmonics generating circuit 4 instead of the noise generator 9. The signal level of harmonics generated in the harmonics generating circuit 4 is made lower by the attenuator 15 and then amplified again by the amplifier 16. When the signal is amplified by the amplifier 16, some noise is generated, and then the noise component is inputted to the voltage controlled amplifier 12 along with the harmonics generated in the harmonics generating circuit 4. As a result, the output of the voltage controlled amplifier 12 contains the noise component and the harmonics component. A time delay is given to these components in accordance to an output of the mixture circuit 8 which is arranged on the downstream side of the time constant circuit 7. While, the output of the amplifier 16 is also supplied to the mixture circuit 13, directly. In the mixture circuit 13, the output of the voltage controlled amplifier 12 and the output directly supplied from the amplifier 16 are mixed together, and then the output of the mixing circuit 13 is added to the original audio signal after the signal component having a frequency below 20kHz is cut off by the high pass filter 14.

In the second embodiment, it is possible to add a noise component, harmonics, a noise component having a time delay and harmonics having a time delay to the original audio signal without providing any independent noise generator. Therefore, the construction of the apparatus becomes simple and the cost for manufacturing the apparatus can be made lower. It should be noted that it is possible to arrange such that the output of the amplifier 16 is not directly supplied to the mixing circuit 13 but only to the voltage controlled amplifier 12. In this case, only the noise component having a time delay and harmonics having a time delay are added to the original audio signal.

Another modification is suggested to provide another pair of attenuator and amplifier between the amplifier 16 and the voltage controlled circuit 12 so as to increase the amount of the noise component to be added to the original audio signal.

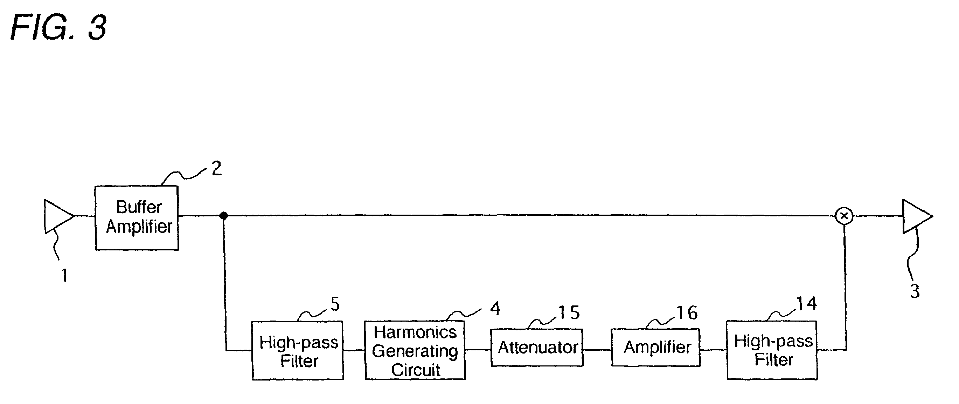

Fig. 3 is a block diagram illustrating a construction of the audio signal reproducing apparatus according to the third embodiment of the present invention. In the third embodiment, neither a time constant circuit 7 nor a voltage controlled amplifier 12 are provided; therefore the construction thereof is extremely simple. The audio signal supplied from the input terminal 1 is separated into two signal lines after amplification by the buffer amplifier 2; one of which is directly sent to the output terminal 3 and the other is supplied to a high pass filter 5. A signal component having a frequency compass range below 6kHz is cut off by the high pass filter 5, and then the signal is supplied into the harmonics generating circuit 4 to generate harmonics thereof. The output of the harmonics generating circuit 4 is supplied into the attenuator 15 where the signal level thereof is decreased; then the signal is amplified again in the amplifier 16. The output of the amplifier 16 is added to the original audio signal via the high pass filter 14 where the signal component having a frequency compass range below 20kHz is eliminated.

As the same as the second embodiment, when the signal is amplified in the amplifier 16, which is arranged after the harmonics generating circuit 4, some noise is generated; the noise is used to compensate for the original audio signal from which the signal component having a frequency range exceeding over 20kHz is lacked. To the original audio signal, are added the noise component generated in this manner and harmonics component generated in the harmonics generating circuit 4, so that the lacking signal component in the higher frequency range of 20kHz or more, can be compensated for to some degree. Since the construction of the circuit of the third embodiment is very simple, it becomes possible to reduce the cost for mass manufacturing the apparatus. It should be noted that if a noise generator is used instead of the attenuator 15 and the amplifier 16, the same effect can be obtained.

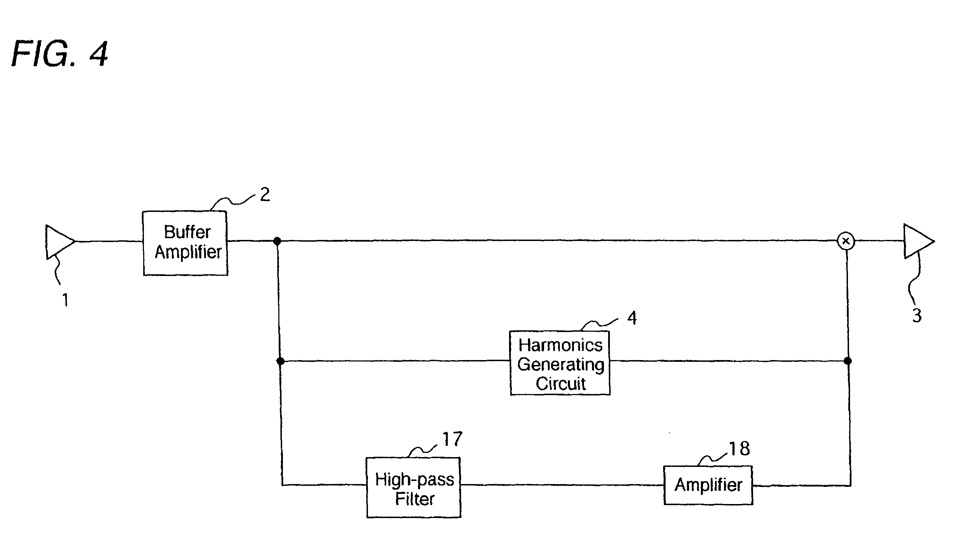

Fig. 4 is a block diagram representing a construction of the audio signal reproducing apparatus according to the fourth embodiment of the present invention. The fourth embodiment can be preferably applied to an audio equipment where the audio signal is reproduced by a one bit type D/A converter. That is to say, the audio signal reproduced in the equipment using the one bit type D/A converter contains a noise component having a high frequency range, particularly, having a range exceeding the audible frequency, i.e. 20kHz. That means, if the apparatus shown in Fig. 4 is applied to such an equipment,, the audio signal supplied from the input terminal 1 contains a noise component having a high frequency range exceeding over 20kHz. The present inventor paid attention to this point. In the fourth embodiment, a part of the original audio signal is taken out and a noise component thereof having a frequency range exceeding over 20kHz is picked up by using a high pass filter 17 where a signal component having a frequency range below 20kHz is removed; the thus picked up noise component having a frequency exceeding 20kHz is then amplified by an amplifier 18 to be added to the original audio signal. In the fourth embodiment, the harmonics generating circuit 4 is provided between the buffer amplifier 2 and the output terminal 3 to generate harmonics of the original audio signal. Therefore, it is arranged such that the harmonics generated by the harmonics generating circuit 4 and the noise component contained in the original audio signal, which is passed through the high pass filter 17, are added to the original audio signal.

According to the fourth embodiment, it becomes possible to obtain a noise component and harmonics, which is required to improve the sound quality in a high frequency range of the original audio signal, with an extremely simple construction, so that the cost for manufacturing the apparatus can be greatly reduced.

In the apparatus illustrated in Fig. 4, both the noise component and the harmonics component are added to the original audio signal, but it may be possible to omit the harmonics generating circuit 4 so as to add only the noise component to the original audio signal. Even in such a simple construction, the primary object of the present invention, i.e. the improvement of the quality of the sound reproduced in the equipment, can be achieved. Further, it is also available to provide a time constant circuit after the amplifier 18 in addition to the construction shown in Fig. 4, or to the construction where the harmonics generating circuit 4 is omitted therefrom , in order to adjust the sound quality of the reproduced signal.

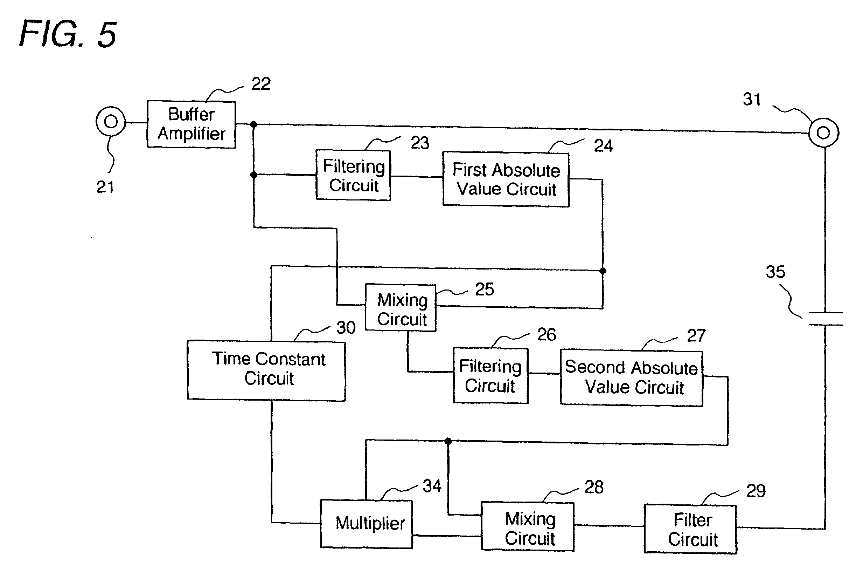

Fig. 5 is a block diagram showing a construction of the fifth embodiment of the present invention. In the fifth embodiment, only a harmonics component is added to the original audio signal without providing any noise generator. As shown in Fig. 5, two non-linear circuits are provided in a stepped manner for generating harmonics in this embodiment. The audio signal supplied from an input terminal 21 is amplified by a buffer amplifier 22, and then a part of the output of the buffer amplifier 22 is inputted into a first absolute value circuit 24 via a filter circuit 23. An output of the first absolute value circuit 24 is sent to a mixing circuit 25, to be mixed with the original audio signal. The output of the mixing circuit 25 is further sent to a second absolute value circuit 27 via a filter circuit 26 to generate harmonics of the original audio signal. On the other hand, a part of the output of the first absolute value circuit 24 is supplied to a time constant circuit 30 to give a time delay to an envelope of the original audio signal; the delayed signal is further supplied to a mixing circuit 28 via the multiplier 34. In the mixing circuit 28, the output of the time constant circuit 30 is mixed with the output of the second absolute value circuit 27. The output of the mixing circuit 28 is then added to the original audio signal via a filter circuit 29. In this embodiment, the absolute value circuits are used as the harmonics generating means, however, it may be possible to use signal detecting circuits or square root circuits instead of the absolute value circuits.

In the fifth embodiment, since the non-linear circuit for generating harmonics having two steps is provided, more natural sound can be reproduced. In the fifth embodiment, only the construction of the non-linear circuit having two steps is shown, but it is possible to modify that to have three steps or more. Further, not only the filter circuit 26 but also the others, i.e. a phase sifter or a delay circuit, may be arranged between both non-linear circuits, i.e. first absolute value circuit 24 and the second absolute value circuit 25. Furthermore, it is possible to mix the output of the non-linear circuit with the output of the delay circuit in each step. In the fifth embodiment, absolute value circuits are used as the non-linear circuit to generate harmonics, but the other non-linear circuits, i.e. clip circuit, a square means circuit, or a logarithmic circuit, can be used instead of the absolute value circuits.

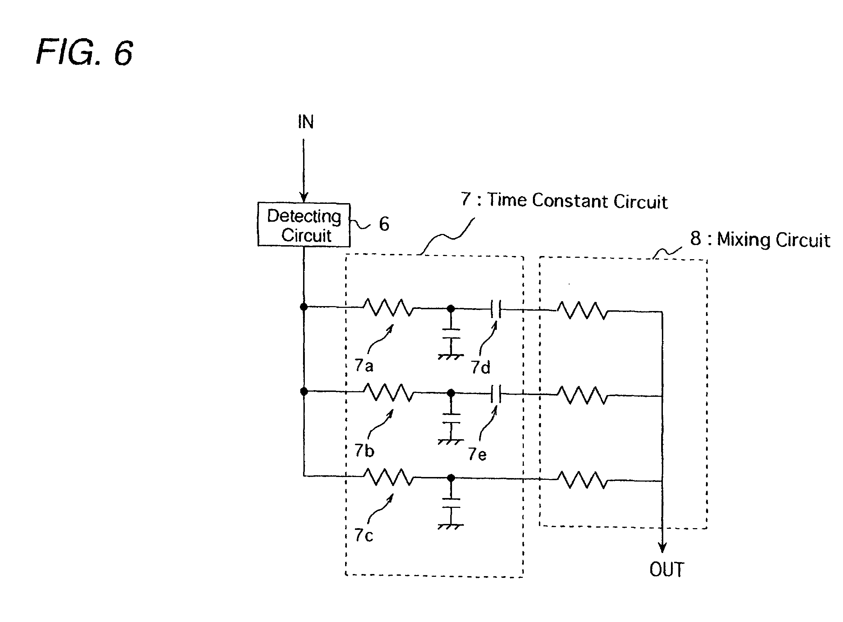

Fig. 6 is a block diagram depicting a construction of the time constant circuit which is preferably used in the audio signal reproducing apparatus according to the present invention.

As shown in Fig. 6, the time constant circuit 7 comprises a first time constant circuit 7a, by which a comparatively short time constant, i.e. 0.2∼2.2mS, is generated, a second time constant circuit 7b, by which an intermediate time constant, i.e. 2.2mS±40 is given, and a third time constant circuit 7c, by which a comparatively long time constant, i.e. 2.2∼25mS is provided and differential elements 7d and 7e are provided to each of the first time constant circuit 7a and the second time constant circuit 7b. Outputs of the first to third time constant circuits 7a to 7c are suitably mixed in the first mixing circuit 8 to obtain an arbitrary level control signal, and the time delay to be given to the noise component and/or the harmonics component, which are added to the original audio signal, can be adjusted. More concretely, the differential element 7d, which is provided in the downstream side of the first time constant circuit 7a, works to emphasis the leading edge of the sound to be reproduced, and the differential element 7e, which is provided in a downstream side of the second time constant circuit 7b, works to emphasis a body of the sound to be reproduced.

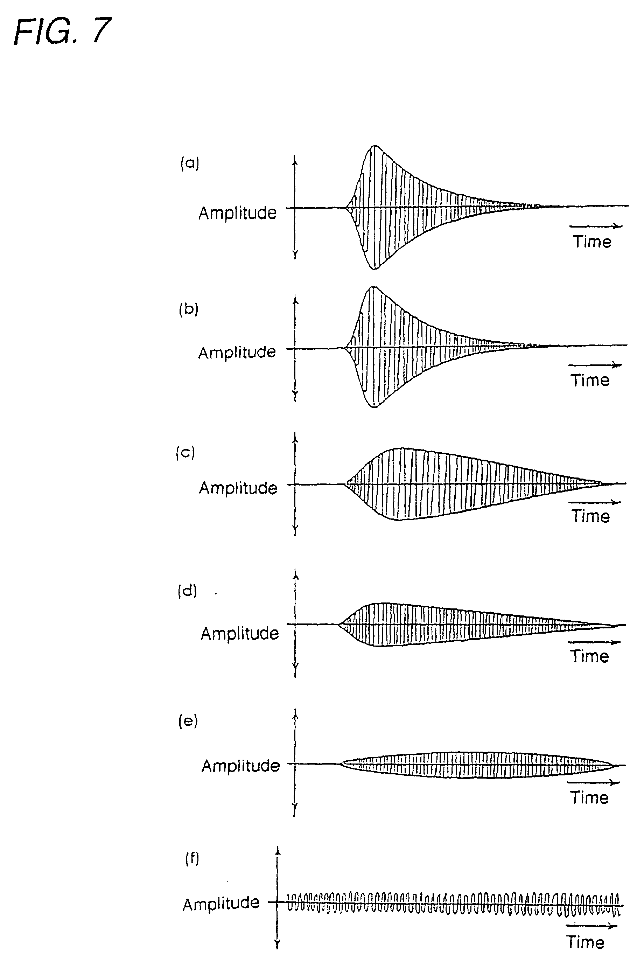

Figs. 7(a) to (f) are schematic views showing envelopes of output signals of the time constant circuit 7, in a case that a sound of a piano is reproduced. Fig. 7(a) shows an envelope of the original audio signal; Fig. 7(b) an envelope of harmonics of the original audio signal shown in Fig. 7(a); Fig. 7(c) an envelope of an output signal of the time constant circuit 7b by which an intermediate time delay is generated; Fig. 7(d) an envelope of an output signal of the time constant circuit 7a by which the comparatively short time delay is generated; Fig. 7(e) an envelope of an output signal of the time constant circuit 7c by which the comparatively long time delay is generated; and Fig. 7(f) illustrates a waveshape of an output signal of the noise generating circuit 9, respectively.

The amount of the noise component to be added to the original audio signal has a relationship with a feeling in a space where no sound exists. That is to say, if a large amount of noise is added to the original audio signal, a sound like the bustle of a busy town can be heard; if a medium amount of noise is added, an atmosphere of an empty hall or a silent church can be obtained; and if a small amount of noise is added, the atmosphere becomes as like as an absolutely silent room. Further, if the harmonics is provided in addition to the noise component, the leading edge of the sound of a piano or percussion can be reproduced in a real manner. When the time delay is further given to the noise and/or harmonics, not only the trailing note of the sound becomes rich but also a music phrase can be reproduced in a smooth manner, so that a more natural sound is obtained. The balance of the amount of noise and harmonics to be added to the original audio signal should be decided depending on the type of musical instruments, however, it is generally recognized by a hearing test that much more noise causes a better result. When a short time delay is given to the noise and/or the harmonics, the leading edge of the sound is emphasized in its reproducible sound, but when a long time delay is given, the trailing note of the sound is emphasized. According to the present invention, these elements can be suitably mixed together so as to be able to obtain a reproduced sound to comply to the listener's preferences.

The number of the time constant circuits provided in the apparatus is not limited to the above mentioned embodiment; four or more time constant circuits may be arranged. Further, other elements, i.e. integral elements, or a mixture of differential elements and integral elements, can be applied thereto.

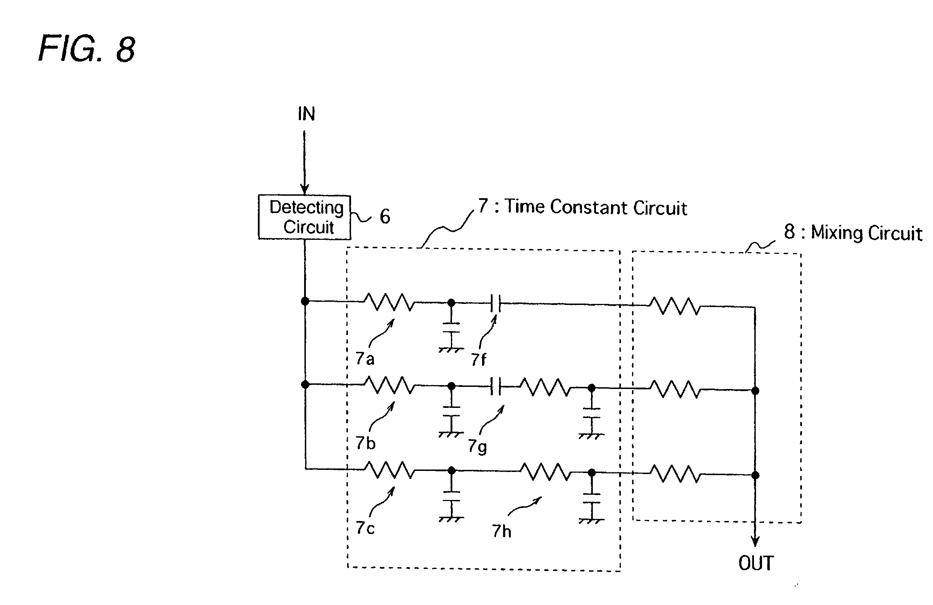

Fig. 8 is a block diagram illustrating another construction of the time constant circuit which is suitably applied to the audio signal reproducing apparatus according to the present invention. The same as the construction shown in Fig. 5, the time constant circuit 7 comprises a first time constant circuit 7a, where a comparatively short time constant, i.e. 0.2∼2.2mS, is generated, a second time constant circuit 7b, where an intermediate time constant, i.e. 2.2mS±40 is generated, and a third time constant circuit 7c is generated, where a comparatively long time constant, i.e. 2.2∼25mS is generated; a differential element 7f is provided to the first time constant circuit 7a, a combination 7g of a differential element an integrating element is provided in the second time constant circuit 7b; and further an integral element 7h is arranged in the time constant circuit 7c, respectively. In this manner, various modifications of the time constant circuit 7 are considered; and the envelope of the level control signal can be freely varied by the combining of these elements so as to comply with the listener's preferences. It is also possible to add step signals to the time constant circuit 7 so that the signals are managed by response of the step signals. Further, such signals can be produced by a program used in a digital area.

In the above explained embodiment, a time constant circuit is used as a means for generating a time delay, but other circuit, i.e. a delay circuit, can also be used instead of the time constant circuit. Furthermore, it is possible to arrange a plurality of voltage controlled amplifiers to generate a time delay.

In the above embodiments, the addition of the noise component and/or harmonics to the original audio signal is conducted in an analog circuit. However, the present invention can be applied to a digital audio equipment, the signal processing to add the noise component and/or the harmonics to the original audio signal, which is explained above can be conducted in a digital area.

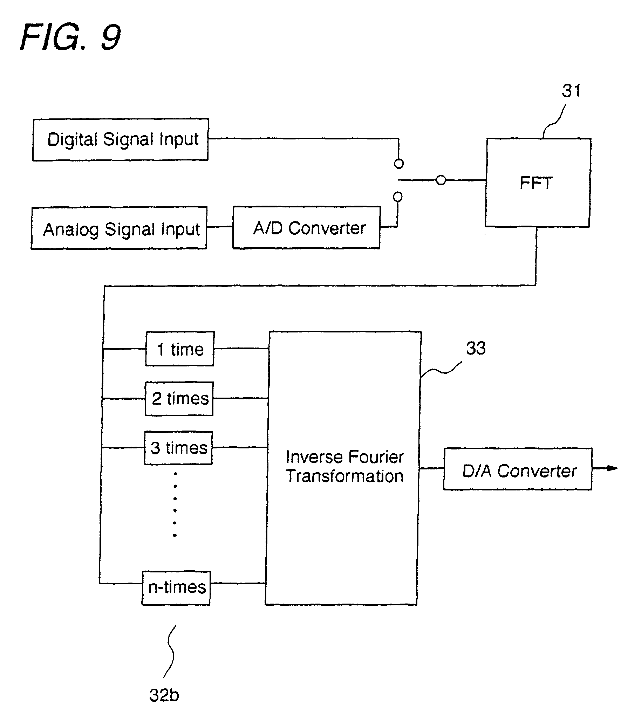

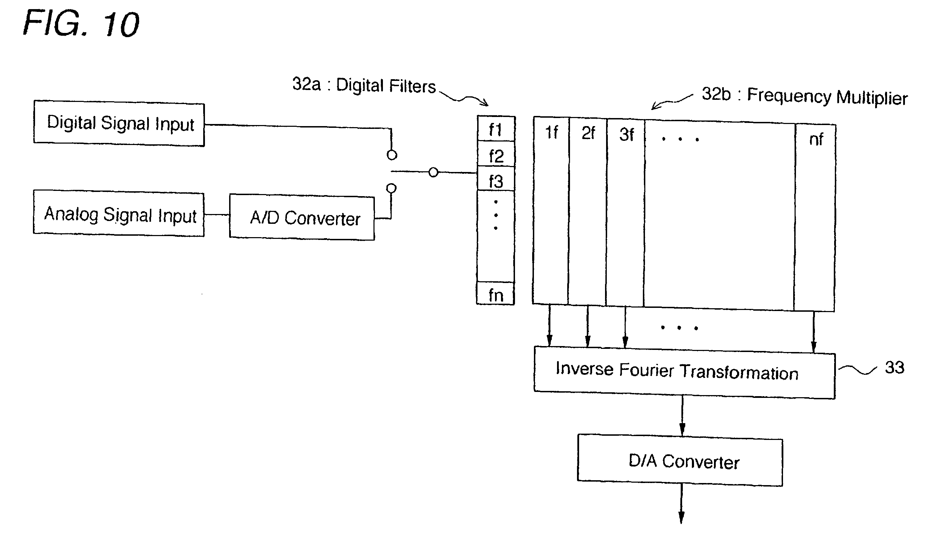

Fig. 9 is a block diagram showing a construction of the audio signal reproducing apparatus according to the sixth embodiment of the present invention, where a signal component in the high frequency range of the original audio signal or harmonics component of the original audio signal is produced by FFT(Fast Fourier Transformation) 31; Fig. 10 is a block diagram depicting a construction of the audio signal reproducing apparatus according to the seventh embodiment of the present invention, where a signal component having a high frequency 1 or harmonics component of the original audio signal is produced by a group of digital filters 32a.

In the sixth and seventh embodiments, the frequency component of the original audio signal is analysed by the FFT 31 or the group of digital filters 32a to obtain frequency data; the data are multiplied by some integral number in a frequency multiplier 32b and then the multiplied data is synthesized; the synthesized data is subjected to an inverse Fourier transformation 33 to produce a signal component in a high frequency range or harmonics of the original audio signal. In the sixth and seventh embodiments, the output signal of the inverse Fourier transformation 33 is converted from digital to analog by a D/A converter 34 first, and then the high frequency component or harmonics converted into analog signals is added to the original audio signal. However, it may be possible to arrange such that the output signal of the inverse Fourier transformation 33 is directly added to the original audio signal and then converted from digital to analog.

Even if the thus obtained high frequency component or harmonics of the original audio signal is added to the original audio signal as it is, the sound quality of the original audio signal can be effectively improved. However, it may be possible to give a time delay element to the high frequency component or harmonics to be added to the original audio signal. The time delay element can be given to the step where the high frequency component or harmonics are produced in FFT 31 or the group of digital filters 32a, or where the high frequency component or harmonics obtained in the FFT 31 or the group of digital filters 32a are transformed again in the inverse Fourier transformation 33. Further, it is also considered to give the time delay when the signals are multiplied in the frequency multiplier 32b. As the same as the embodiments explained above, it is possible to combine different types of time constant circuits or delay circuits can be combined together to reproduce a sound which satisfies the purpose, i.e. preference of listeners, and reduction of the manufacturing cost, etc.

It should be noted that the noise generating circuit is omitted in the embodiments shown in Figs. 9 and 10. However, when a noise component, which is contained in the original audio signal, is inputted into the harmonics generating circuit, a noise component having a much higher frequency would be outputted therefrom. Therefore, if the quality of sound required by the listener is not so high, it is possible to obtain a sufficient effect even if the noise generating circuit is omitted from the apparatus.

It is, of course, possible to provide a noise generating circuit in the apparatus in an independent manner. In this case, a necessary noise component can be generated in a digital area. It is further possible to mix the harmonics and the noise component together in a digital area.

Furthermore, in addition to the above mentioned constructions of the embodiments of the present invention, it may be possible to arrange the apparatus such that multi-step noise generators are provided to generate "pink noise", the noise component is obtained from "heat noise"; the noise component and/or harmonics is/are added to the original audio signal via a capacitor; and the high pass filter 14, which is provided in order to cut off the signal component having a frequency range of 20kHz or less from the signal to be added to the original audio signal, is arranged as a highly-ordered filter; and the apparatus according to the present invention is arranged in every channel in a multi-channel system, such as a stereo system, Dolby surround system. An audio signal reproducing apparatus having a more highly qualified performance can be obtained by these arrangements or their combinations.

The embodiments and their modifications explained above are described for a digital type audio equipment, but the present invention can be also applied to an analog type audio equipment. Furthermore, all of the signal processing mentioned above can be conducted in a digital area.

The idea of the present invention is to compensate for the signal in the frequency range, which had been cut off from the original audio signal when the sound is reproduced. In order to compensate for it, various methods can be considered, one of which is simply to produce a noise component and harmonics and add them to the original audio signal because the high frequency part of the sound exceeding the audible frequency is composed of a mixture of the noise component and the harmonics; another is to add only a noise component to the original audio signal since the ratio of the noise component of the original audio signal is the majority in its high frequency range; another is to add only harmonics to the original audio signal without separately providing a noise generating means, because when some noise is inputted into the harmonics generating circuit the noise component in a higher frequency range is outputted from the harmonics generating circuit. That is to say, the present invention places emphasis on the points of the shape of the spectrum and the amount of the signal to be reproduced and the timing control when the noise component and/or harmonics should be added to the original audio signal. It is based on experimental result of many hearing tests that the audio sense of listeners is more sensitive in a high frequency range to the variation of the energy spectrum of the sound in time than to the waveshape per se of the sound.

According to the audio signal reproducing apparatus of the present invention, it becomes possible to compensate for the signal component in a high frequency range, which has been cut off in a conventional apparatus, to reproduce a more natural sound which is close to an original sound; and to obtain a reproduced sound which complies with the listener's demands or preferences by giving a time delay to the signal to be added to the original audio signal and adjusting the amount of the time delay. Furthermore, the construction of the circuit becomes simpler, so that the size of the apparatus can be made small, and the power consuming and the manufacturing cost can be reduced.

## Claims

1. An apparatus for reproducing audio signals, wherein an audio signal is reproduced in such a manner that an output having a frequency spectrum in a range exceeding over an upper limit of reproducible frequency range or exceeding over an upper limit of an audible frequency range of an audio signal to be reproduced, comprising:
a harmonics generating means for generating harmonics on the basis of a part of original audio signal being composed of a fast Fourier transformation circuit or a group of digital filters; and
a signal adding means for adding an output of said harmonics generating means to said original audio signals.

2. An apparatus for reproducing audio signals accordint to claim 1, further comprising a noise generating means being provided to be separated from said original audio signal;
a signal adding means for adding an output of said harmonics generating means and an output of said noise generating means to said original audio signals.

3. An apparatus for reproducing audio signals according to Claim 1 or 2, further comprising a frequency band selecting means for selecting a predetermined frequency band from an output of said harmonics generating means;
wherein harmonics having the thus selected frequency band is added to the original audio signal by said signal adding means.

4. An apparatus for reproducing audio signals according to claim 1 or 2, further comprising a time delay element generating means for generating a time delay with respect to said original audio signal in at least a part of an output of said harmonics generating means.

5. An apparatus for reproducing audio signals according to claim 4, wherein said time delay element generating means is composed of a plurality of time constant circuits each having a different time constant so that a quality of a sound reproduced by said apparatus is adjusted by arbitrarily combining the outputs of these time constant circuits.

6. An apparatus for reproducing audio signals according to claim 1 to 5, wherein a part of said original audio signal is taken out as a level control signal, and a level of said harmonics to be added to said original audio signal is controlled in accordance with a level of said level control signal.

7. An apparatus for reproducing audio signals according to any one of claims 1 to 6, wherein said noise generating means is composed of a signal attenuating means for attenuating an output of said harmonics generating means and a signal amplifying means for amplifying an output of said signal attenuating means.

8. An apparatus for reproducing audio signals according to any one of claims 4 to 7, wherein said time delay element generating means for giving a time delay for an envelope of said original audio signal to at least a part of an output of said noise component generating means and/or at least a part of an output of said harmonics generating means.

9. An apparatus for reproducing audio signals according to anyone of claims 4 to 8, wherein said time delay element generating means is composed of a plurality of time constant circuits each having a different time constant so that the quality of sound reproduced by said apparatus is adjusted by arbitrarily combining the outputs of said time constant circuits.

10. An apparatus for reproducing audio signals according to any one of claims 1 to 9, wherein said harmonics generating means comprises a Fourier transforming means and an inverse Fourier transforming means so that said original audio signal is subjected to a Fourier transformation, multiplied, and then subjected to an inverse Fourier transformation;
whereby a high frequency component of said original audio signal or harmonics of said original audio signal is generated in a digital area.

11. An apparatus for reproducing audio signals according to any one of claims 1 to 9, wherein said harmonics generating means is composed of a group of digital filters and an inverse Fourier transforming means so that said original audio signal is filtered by said group of digital filters, multiplied, and then subjected to an inverse Fourier transformation;
whereby a high frequency component of said original audio signal or harmonics of said original audio signal is generated in a digital area.

12. An apparatus for reproducing audio signals according to claim 9 or 11, further comprising a time delay element generating means for generating a time delay with respect to said original audio signal when the output of said Fourier transforming means or said group of digital filters is subjected to said inverse Fourier transforming means.

## Patentansprüche

1. Ein Gerät zur Wiedergabe von Audiosignalen, in dem ein Audiosignal so wiedergegeben wird, daß ein Ausgang ein Frequenzspektrum in einem Bereich aufweist, der über eine obere Grenze des reproduzierbaren Frequenzbereichs oder über eine obere Grenze eines hörbaren Frequenzbereichs eines wiederzugebenden Audiosignals hinausgeht, und umfaßt:
Ein Mittel zum Generieren von Obertönen auf der Basis eines Teils des ursprünglichen Audiosignals, das zusammengesetzt ist aus einer schnellen Fourier-Transformationsschaltung oder einer Gruppe von Digitalfiltern; und
einem Signaladditionsmittel zum Addieren eines Ausgangs des Oberton-Generierungsmittels zu dem ursprünglichen Audiosignal.

2. Ein Gerät zur Wiedergabe von Audiosignalen gemäß Anspruch 1, ferner enthaltend ein Rauschgenerierungsmittel, das vorgesehen ist, vom ursprünglichen Audiosignal abgetrennt zu werden;
ein Signaladditionsmittel zum Addieren eines Ausgangs des Obertöne-Generierungsmittels und eines Ausgangs des Rauschgenerierungsmittels zu den ursprünglichen Audiosignalen.

3. Ein Gerät zur Wiedergabe von Audiosignalen gemäß Anspruch 1 oder 2, ferner enthaltend ein Frequnezbandauswahl-Mittel zum Auswählen eines vorgegebenen Frequenzbands aus einem Ausgang des Obertöne-Generierungsmittels;
wobei Obertöne mit dem so gewählten Frequenzband durch das Signaladditionsmittel zu dem ursprünglichen Audiosignal addiert werden.

4. Ein Gerät zur Wiedergabe von Audiosignalen gemäß Anspruch 1 oder 2, ferner enthaltend ein Zeitverzögerungselement-generierendes Mittel zum Generieren eines Zeitverzugs gegenüber dem ursprünglichen Audiosignal in mindestens einem Teil eines Ausgangs des Obertöne-Generierungsmittels.

5. Ein Gerät zur Wiedergabe von Audiosignalen gemäß Anspruch 4, in dem das Zeitverzögerungselement-generierende Mittel aus einer Vielzahl von Zeitkonstantenschaltungen mit jeweils einer anderen Zeitkonstante besteht, so daß eine Qualität eines Tons, der von dem Gerät wiedergegeben wird, eingeregelt wird durch willkürliches Kombinieren der Ausgänge dieser Zeitkonstantenschaltungen.

6. Ein Gerät zur Wiedergabe von Audiosignalen gemäß Anspruch 1 bis 5, in dem ein Teil des ursprünglichen Audiosignals als Pegelsteuersignal herausgenommen wird, und ein Pegel der Obertöne zum Addieren zu dem ursprünglichen Audiosignal gemäß einem Pegel des Pegelsteuersignals gesteuert wird.

7. Ein Gerät zur Wiedergabe von Audiosignalen gemäß einem beliebigen der Ansprüche 1 bis 6, in dem sich das Rauschgenerierungsmittel zusammensetzt aus einem Signaldämpfungsmittel zum Dämpfen eines Ausgangs des Obertongenerierungsmittels, und einem Signalverstärkungsmittel zum Verstärken eines Ausgangs des Signaldämpfungsmittels.

8. Ein Gerät zur Wiedergabe von Audiosignalen gemäß einem beliebigen der Ansprüche 4 bis 7, in dem das Zeitverzögerungselement Mittel zum Geben einer Zeitverzögerung für eine Hüllkurve des ursprünglichen Audiosignals zu mindestens einem Teil eines Ausgangs des Rauschkomponenten-Generierungsmittel und/oder mindestens einem Teil eines Ausgangs des Oberton-Generierungsmittels generiert.

9. Ein Gerät zur Wiedergabe von Audiosignalen gemäß einem beliebigen der Ansprüche 4 bis 8, in dem sich das Zeitverzögerungselement-Generierungsmittel zusammensetzt aus einer Vielzahl von Zeitkonstantenschaltungen, die jeweils eine unterschiedliche Zeitkonstante haben, so daß die von dem Gerät reproduzierte Tonqualität durch willkürliche Kombination der Ausgänge der Zeitkonstanten geregelt wird.

10. Ein Gerät zur Wiedergabe von Audiosignalen gemäß einem beliebigen der Ansprüche 1 bis 9, in dem das obertongenerierende Mittel ein Fourier-Transformationsmittel sowie ein umgekehrtes Fourier-Transformationsmittel umfaßt, so daß das ursprüngliche Audiosignal einer Fourier-Transformation unterzogen, multipliziert, und dann einer umgekehrten Fourier-Transformation unterzogen wird;
wobei eine Hochfrequenzkomponente des ursprünglichen Audiosignals oder eine Obertonkomponente des ursprünglichen Audiosignals in einem Digitalbereich generiert wird.

11. Ein Gerät zur Wiedergabe von Audiosignalen gemäß einem beliebigen der Ansprüche 1 bis 9, in dem das Obertongenerierende Mittel aus einer Gruppe Digitalfiltern und einem umgekehrten Fourier-Transformationsmittel besteht, so daß das ursprüngliche Audiosignal von der Digitalfiltergruppe gefiltert, multipliziert, und dann einer umgekehrten Fourier-Transformation unterzogen wird;
wobei eine Hochfrequenzkomponente des ursprünglichen Audiosignals oder Obertöne des ursprünglichen Audiosignals in einem digitalen Bereich generiert werden.

12. Ein Gerät zur Wiedergabe von Audiosignalen gemäß Anspruch 9 oder 11, ferner enthaltend ein Zeitverzögerungselement-Generierungsmittel zum Generieren einer Zeitverzögerung im Hinblick auf das ursprüngliche Audiosignal, wenn der Ausgang des Fourier-Transformationsmittels oder die Digitalfiltergruppe dem umgekehrten Fourier-Transformationsmittel unterzogen wird.

## Revendications

1. Appareil pour reproduire des signaux audio, dans lequel un signal audio est reproduit de telle manière qu'une sortie ayant un spectre de fréquence dans une plage dépassant un seuil supérieur de bande de fréquences reproductible ou dépassant un seuil supérieur d'une bande de fréquences audible d'un signal audio à reproduire, comprenant :
un moyen générateur d'harmoniques pour générer des harmoniques sur la base d'une partie de signal audio original composé d'un circuit à transformation de Fourier rapide ou d'un groupe de filtres numériques ; et
un moyen d'ajout de signaux pour ajouter une sortie desdits moyen générateur d'harmoniques aux dits signaux audio originaux.

2. Appareil pour reproduire des signaux audio selon la revendication 1, comprenant en outre un moyen de générer du bruit fourni pour être séparé dudit signal audio original ;
un moyen d'ajout de signaux pour ajouter une sortie dudit moyen générateur d'harmoniques et une sortie dudit moyen générateur de bruit aux dits signaux audio originaux.

3. Appareil pour reproduire des signaux audio selon la revendication 1 ou 2, comprenant en outre un moyen de sélection de bande de fréquences pour sélectionner une bande de fréquences prédéterminée à partir d'une sortie dudit moyen générateur d'harmoniques ;
dans lequel des harmoniques ayant la bande de fréquence ainsi sélectionnée sont ajoutés au signal audio original par ledit moyen d'ajout de signaux.

4. Appareil pour reproduire des signaux audio selon la revendication 1 ou 2, comprenant en outre un moyen générateur d'éléments de retard temporel pour générer un délai temporel par rapport audit signal audio original dans au moins une partie d'une sortie dudit moyen générateur d'harmoniques.

5. Appareil pour reproduire des signaux audio selon la revendication 4, dans lequel ledit moyen générateur d'éléments de retard temporel est composé d'une pluralité de circuits de constantes de temps chacun ayant une constante de temps différente de sorte que la qualité d'un son reproduit par ledit appareil est ajusté en combinant arbitrairement les sorties de ces circuits de constantes de temps.

6. Appareil pour reproduire des signaux audio selon les revendications 1 à 5, dans lequel une partie dudit signal audio original est prélevée comme signal de contrôle de niveau, et un niveau desdits harmoniques à ajouter audit signal audio original est contrôlé selon un niveau dudit signal de contrôle de niveau.

7. Appareil pour reproduire des signaux audio selon les revendications 1 à 6, dans lequel ledit moyen générateur de bruit est composé d'un moyen d'atténuation des signaux pour atténuer une sortie dudit moyen générateur d'harmoniques et un moyen amplificateur de signaux pour amplifier une sortie dudit moyen atténuateur de signaux.

8. Appareil pour reproduire des signaux audio selon l'une quelconque des revendications 4 à 7, dans lequel ledit moyen générateur d'éléments de retard pour donner un retard temporel pour une enveloppe dudit signal audio original à au moins une partie d'une sortie dudit moyen générateur de composants de bruit et/ou au moins une partie d'une sortie dudit moyen générateurs d'harmoniques.

9. Appareil pour reproduire des signaux audio selon l'une quelconque des revendications 4 à 8, dans lequel ledit moyen générateur d'éléments de retard temporel est composé d'une pluralité de circuits de constantes de temps chacun ayant une constante de temps différente de sorte que la qualité du son reproduit par ledit appareil se règle en combinant arbitrairement les sorties desdits circuits de constantes de temps.

10. Appareil pour reproduire des signaux audio selon l'une quelconque des revendications 1 à 9, dans lequel ledit moyen générateur d'harmoniques comprend un moyen de transformation de Fourier et un moyen de transformation de Fourier inverse de sorte que ledit signal audio original est soumis à une transformation de Fourier, multiplié, puis soumis à une transformation de Fourier inverse ;
moyennant quoi une composante haute fréquence dudit signal audio original ou d'harmoniques dudit signal audio original est générée dans une zone numérique.

11. Appareil pour reproduire des signaux audio selon l'une quelconque des revendications 1 à 9, dans lequel ledit moyen générateurs d'harmoniques est composé d'un groupe de filtres numériques et d'un moyen de transformation de Fourier inverse de sorte que ledit signal audio original est filtré par ledit groupe de filtres numériques, multiplié, puis soumis à une transformation de Fourier inverse ;
moyennant quoi une composante haute fréquence dudit signal audio original ou d'harmoniques dudit signal audio original est générée dans une zone numérique.

12. Appareil pour reproduire des signaux audio selon la revendication 9 ou 11, comprenant en outre un moyen générateur d'éléments de retard temporel pour générer un retard temporel par rapport audit signal audio original lorsque la sortie dudit moyen de transformation de Fourier ou dudit groupe de filtres numériques est soumis audit moyen de transformation de Fourier inverse.
